# EUROPÄISCHE PATENTANMELDUNG

(11) **EP 2 733 657 A1**
(43) Veröffentlichungstag der Anmeldung: **21.05.2014**
(21) Anmeldenummer: 12007810.0
(22) Anmeldetag: 19.11.2012
(51) Int. Cl.: G06Q 30/02, G06F 3/042

(54) **Vorrichtung zur Eingabe von Daten und/oder Steuerbefehlen**

(71) Anmelder: CSS electronic AG, 9103 Schwellbrunn (CH)
(72) Erfinder: Sievers, Harry, 40489 Düsseldorf (DE)
(74) Vertreter: Hafner, Dieter

(57) **Zusammenfassung**

Die Erfindung betrifft eine Vorrichtung zur Eingabe von Daten und/oder Steuerbefehlen in eine elektronische Einrichtung, die mit einer Anzeigeeinrichtung und/oder einer elektrischen Handlingseinrichtung, Sicherheitseinrichtung, Verkaufsautomat oder dergleichen in Verbindung steht, wobei die Vorrichtung die Eingabe von Daten oder Steuerbefehlen von einem Außenbereich ermöglicht und die elektronische Einrichtung In einem begehbaren Innenraum angeordnet ist, der vom Außenbereich durch eine Trennscheibe getrennt ist, wobei die Trennscheibe einen Zugang nicht autorisierter Personen in den Innenraum verhindert.

## Beschreibung

Die Erfindung betrifft eine Vorrichtung zur Eingabe von Daten und/oder Steuerbefehlen in eine elektronische Einrichtung, mit einer Anzeigeeinrichtung und/oder einer Handlingseinrichtung, z.B. in Form eines Roboters, einer Sicherheitseinrichtung, z.B. einer Schließeinrichtung, einer Haustechnik-einrichtung, wie beispielsweise einer Klima- oder Heizeinrichtung oder dergleichen in Verbindung steht. Unter dem Begriff "Anzeigeeinrichtung" sind alle Einrichtungen zu subsumieren, die einen Eingabe- oder Steuerbefehl anzeigen oder bestätigen können, darunter damit auch einfache Anzeigeeinrichtungen wie Lämpchen, Leuchtbalken, Ziffern- oder Buchstabenanzeigen oder Bildschirme, auf denen komplette Texte und Bilder angezeigt werden können.

Die Vorrichtung zur Eingabe von Daten oder Steuerbefehlen soll die Eingabe von Daten oder Steuerbefehlen von einem Außenbereich her ermöglichen, der von einem begehbaren Innenraum abgetrennt ist, in dem die elektronische Einrichtung und Anzeige- und Handlingseinrichtung oder dergleichen untergebracht sind. Die Bedienungsperson der Vorrichtung soll in die Lage versetzt sein, in den Innenraum vom Außenbereich her hineinzusehen und der Anzeige oder den Bewegungen oder dergleichen der Handlingseinrichtung folgen können. Dazu ist der Außenbereich vom begehbaren Innenraum durch eine Trennscheibe getrennt, die einen Zugang nicht autorisierter Personen in den Innenraum verhindert.

Als Stand der Technik ist es bekannt, Vorrichtungen zur Eingabe von Daten oder Steuerbefehlen in eine elektronische Einrichtung in einem Innenraum z.B. an einer Außenwand eines Gebäudes anzuordnen, um eine Schließanlage oder dergleichen betätigen zu können. Über diese Eingabevorrichtung kann eine Bedienungsperson einen Zugangscode eingeben, der dann ein Schloss öffnet, um der dann autorisierten Person einen Zugang zum Innenbereich zu ermöglichen.

Häufig sind in Schaufenstern von Ladengeschäften, Immobilienbetrieben und Banken und dergleichen Bildschirme aufgestellt, auf denen Waren oder Dienstleistungen angeboten werden oder sonstige Informationen wie Öffnungszeiten von Filialen, Börsenkurse, zu kaufende oder zu mietende Immobilien und dergleichen angeboten werden. Die Angebote können vom Außenbereich her wahrgenommen werden, ein Sortieren oder Auswählen der Angebote durch einen Betrachter oder Benutzer ist aber in der Regel nicht oder nur erschwert möglich.

Der Erfindung liegt die Aufgabe zugrunde, eine Vorrichtung zur Eingabe von Daten und/oder Steuerbefehlen mit den Merkmalen des Oberbegriffes des Anspruches 1 derart auszubilden, dass eine Steuerung einer Anzeigeeinrichtung, einer Handlingseinrichtung oder einer sonstigen Vorrichtung im Innenbereich durch eine unmittelbar vor einer Trennscheibe stehenden Person auf einfache Weise und ohne Vornahme technischer Maßnahmen im Außenbereich möglich ist. Diese Aufgabe wird durch die kennzeichnenden Merkmale des Anspruches 1 gelöst, vorteilhafte Weiterbildungen ergeben sich aus den Unteransprüchen.

Zur Lösung der Aufgabe umfasst die Vorrichtung Markierungen auf der Trennscheibe, die von der Außenseite der Trennscheibe her sichtbar sind und wenigstens ein von einer Bedienungsperson wahrnehmbares Eingabefeld auf der Außenseite der Trennscheibe definieren. Das oder die Eingabefelder können z.B. eine alphanumerische Tastatur bilden, sie können aber auch einen einfachen numerischen Ziffernblock darstellen oder lediglich Felder mit Pfeilen nach oben, nach unten, links oder rechts, nach Art einer Cursor-Taste darstellen, mit der eine Bildschirmanzeigeeinrichtung oder eine Handlingseinrichtung angesteuert werden kann. Es ist auch möglich, lediglich vier benachbart angeordnete Felder vorzusehen, die Bedienungsperson hat dann z.B. die Möglichkeit, von einem linken Feld in ein rechtes Feld zu wischen und dadurch eine Steuerbewegung rechts" auszulösen oder von einem oberen in ein unters Feld zu wischen durch Handauflegen, um einen Steuerbefehl "von oben nach unten" auszubilden, der nach Art einer Mausbäwegung von der elektronischen Einrichtung umgesetzt wird. All dies geschieht auf oder unmittelbar vor der Außenhaut der Trennscheibe, ohne dass dort irgendwelche komplizier1e technischen Maßnahmen vorgesehen werden müssen.

Um die Markierungen abzutasten, ist nur im Innenraum ein Sensor vorgesehen, der die Trennscheibe vom Innenraum her abtastet derart, dass die manuelle Berührung der Außenseite der Trennscheibe vom Außenbereich her im Bereich wenigstens einer Markierung durch den Sensor erfasst, lokalisiert und als Eingabe- oder Steuerbefehl verwertet wird. Dies geschieht auf die bereits geschilderte Weise, beispielsweise durch Antippen eines alphanumerischen Feldes, eines numerischen Ziffernblockes oder durch eine Wischbewegung oder sonstige Tastbewegung, die eine cursor-artige Bewegung nach oben, unten, links oder rechts verursacht.

Sodann muss eine Kommunikationseinrichtung im Innenraum vorgesehen werden, die an die Bedienungsperson optische und/oder akustische Eingabehinweise oder Eingabeergebnisse übermittelt, die auf eine Bedienung der Eingabevorrichtung durch Berührung der Trennscheibe von außen resultieren.

Beispiele, die mit der Erfindung ausgeführt werden können, wurden oben bereits kurz geschildert. Zum Beispiel kann ein Immobilienmakler auf einem Bildschirm Immobilien in Form von Häusern anbieten, die Bedienungsperson kann von außen eingeben: Idh interessiere mich für Häuser bis € 300.000,00, bis € 500.000,00, bis € 1.000.000,00 oder über € 1.000.000,00. Dadurch kann die Bedienungsperson eine Auswahl vornehmen.

Ein nächstes Auswahlkriterium kann beispielsweise eine Verkehrsanbindung, die Nähe zum Stadtzentrum, mit oder ohne Garten, mit oder ohne Tiefgarage, Einfamilienhaus, Mehrfamilienhaus, einzelstehendes Haus oder Reihenhaus und dergleichen sein. Die Bedienungsperson kann auf einfache Weise mit der Anzeige im Innenbereich kommunizieren, ohne auf die Anzeige selbst Zugriff zu haben oder auf eine empfindliche Tastatur unmittelbar zugreifen zu können. Dies alles geschieht durch Berühren der Trennscheibe von außen, die gleichsam eine Doppelfunktion als Schutz gegen Zutritt vqn außen in den Innenbereich darstellt und eine Tastaturoberfläche bildet, auf der die Bedienungsperson "arbeiten" kann. Ein weiteres Beispiel einer Anwendung kann beispielsweise die Anzeige in einem Bankschaufenster sein. Die Bedienungsperson kann auf einfache Weise von außen durch Berühren der Außenseite der Trennscheibe Börsendaten abfragen oder sogar Aktien kaufen und verkaufen.

Ein weiterer Einsatzbereich sind die Anzeigen von Touristikunternehmen, der Bahn oder an Flughäfen, um beispielsweise Flüge auszuwählen, mit unterschiedlichen Flugzielen, Abflugdaten und Abflugzeiten.

Darüber hinaus lässt sich die Vorrichtung auch im Laborbereich zum Handling von giftigen oder radioaktiven Substanzen verwenden. Die Bedienungsperson ist auf sichere Weise vom Innenbereich, in dem ein Roboter die giftigen Reagenzchen handelt, getrennt und kann die Außenseite der Trennscheibe als Eingabefläche benutzen. Für eine Robotersteuerung bieten sich beispielsweise zwei getrennte Eingabebereibhe an, beispielsweise ein Eingabebereich für die linke Hand der Bedienungsperson und ein Eingabebereich für die rechte Hand der Bedienungsperson, die Bedienungsperson kann dann mit der linken Hand z. B. einen Greifarm öffnen und schließen und mit der rechten Hand einen Greifarm in die entsprechende Position bewegen, in der er Zugriff auf ein Reagenzglas, einen Isotopenbehälter oder dergleichen hat.

Die Vorrichtung kann auch zur Bedienung eines Verkaufsautomaten herangezogen werden. Ein Verkaufsautomat umfasst im Innenraum den Bildschirm, auf welchen beispielsweise unterschiedliche Pharmaka eines Apothekenbetriebes angezeigt und angeboten werden. Durch Bedienung der Eingabevorrichtung durch Berühren der Außenhaut der Schaufensterscheibe wählt die Bedienungsperson das gewünschte Arzneimittel aus, gibt beispielsweise einen Kreditkartencode ein und das Arzneimittel wird über einen im Bereich der Schaufensterscheibe befindlichen Schacht ausgegeben. Gleiches gilt natürlich für andere Waren, die in Verkaufsautomaten bevorratet und durch diese ausgegeben werden können.

In Weiterbildung der Erfindung können die Markierungen auf der Innenseite der Trennscheibe angeordnet sein. Grundsätzlich besteht die Möglichkeit, die Markierungen auf der Innenseite der Trennscheibe aufzukleben, aufzudrucken oder beispielsweise durch einen geeigneten Filzschreiber aufzumalen. Die Markierungen können dabei als frei definierbares Tastenfeld vorgesehen sein, beispielsweise in einer 3x3 oder 3x4 Blockanordnung. Auf der Anzeigevorrichtung wird die Bedeutung der Tastenfelder definiert, damit angezeigt, was die Berührung eines von innen angebrachten Tastenfeldes von außen auslöst, beispielsweise eine Zifferneingabe oder die Ausgabe eines bestimmten Produktes durch einen Verkaufsschacht. Die Markierungen können auch auf die Innenseite der Trennscheibe projiziert werden. Eine derartige Technik ist bereits bekannt bei sogenannten virtuellen Tastaturen, die auf eine Schreibtischoberfläche projiziert werden können und abgetastet werden können. Wird eine derartige Projektionstechnik im Rahmen der Erfindung eingesetzt, ist es möglich, eines der auf der Trennscheibe vorgesehenen Tastenfelder optisch, z.B. durch Kontrast, Helligkeit oder Farbe hervorzuheben und dadurch einen nächsten Bedienungsschritt anzuregen oder einen Eingabebefehl, der über dieses Tastenfeld erfolgt ist, zu bestätigen. Es ist auch möglich, auf der Anzeigevorrichtung die Anregung anzuzeigen "Bei Einverständnis mit der vorgenommenen Auswahl drücken Sie bitte die grüne Taste" oder dergleichen oder "Wenn Sie Ihre Eingabe löschen wollen, drücken Sie bitte die rote Taste", falls eines der Eingabefelder rot hervorgehoben ist. Schließlich ist es auch möglich, die einzelnen Eingabefelder mit Textbausteinen wie Enter, Löschen, Bestätigung, Abbruch, Start oder mit Zahlenwerten zu versehen, wie beispielsweise Preisgrenze, Postleitzahl und dergleichen. Die Projektionstechnik ist in der Lage, die angezeigten Tastenfelder damit auszuleuchten. Der Sensor kann als Bewegungssensor ausgebildet sein, um quasi eine Mausbewegung festzustellen, der Sensor kann aber auch ein auf der Innenseite der Trennscheibe angeordneter Kapazitätssensor sein, der reagiert, wenn von außen ein Tastenfeld berührt wird. Die Elemente des kapazitiven Sensors können weitgehend transparent ausgebildet werden, so dass die Markierungen mehr oder weniger durchsichtig sind und der Blick durch die Trennscheibe nur wenig oder nicht gestört wird. Ein derartiger Sensor kann drahtlos mit der elektronischen Einrichtung verbunden sein.

Wie bereits oben angemerkt, kann die Kommunikationseinrichtung als Bildschirm ausgebildet sein, über den abfragbare Informationen oder Bedienungshinweise an den außerhalb der Trennscheibe befindlichen Benutzer abgegeben werden können. Die Kommunikationseinrichtung kann auch einen Lautsprecher umfassen, dessen akustische Signale von einer außerhalb der Trennscheibe stehenden Bedienungsperson wahrgenommen werden können. Kommunikationseinrichtung, Sensor, eine Projektionseinrichtung zur Projektion der Markierungen und weitere Elemente können innerhalb der Trennscheibe in einem gemeinsamen tragbaren Gehäuse angeordnet sein, das auf einfache Weise z.B. in ein Schaufenster gestellt werden kann, wenn die Trennscheibe als Schaufensterscheibe eines Ladengeschäftes ausgebildet ist.

Weiterhin betrifft die Erfindung ein Verfahren zur Ansteuerung einer elektronischen Einrichtung mit Dateneingabe oder Steuerbefehlen mit den Merkmalen des Anspruches 15.

Die Erfindung ist anhand von Ausführungsbeispielen näher erläutert. Diese zeigen:
- Fig. 1: eine schematische Darstellung im Schnitt durch eine Schaufensterscheibe, die einen Außenbereich von einem Innenraum trennt, wobei im Innenraum die Anzeigevorrichtung und Kommunikationseinrichtung sowie ein Sensor angeordnet sind;
- Fig. 2: eine erste Anordnung von Markierungen auf der Trennscheibe;
- Fig. 3: eine die erste Anordnung in einer zweiten Ausgestaltung weitere Anordnung von Markierungen auf der Trennscheibe zur Eingabe von Steuerbefehlen;
- Fig.4: eine Vorrichtung, bei weicher Steuerbefehle zur Steuerung einer Handlingseinrichtung eingegeben werden;
- Fig.5: eine zweite Anordnung von Markierungen zur Eingabe von Daten und Steuerbefehlen.

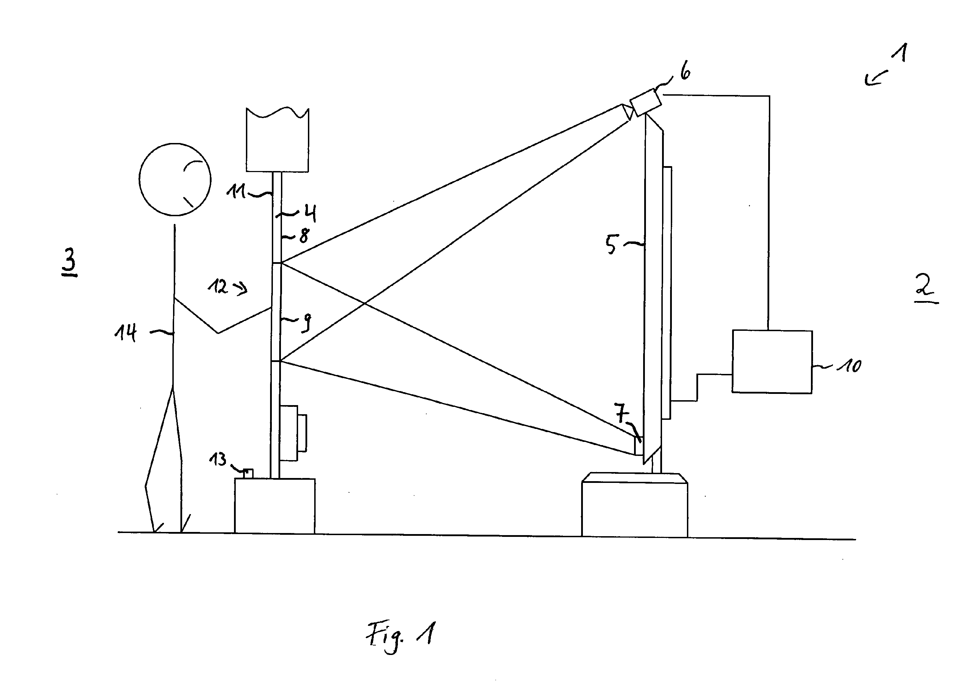

Figur 1 zeigt eine Vorrichtung 1 zur Eingabe vom Daten, die in einem Innenraum 2 angeordnet ist. Der Innenraum 2 ist vom Außenbereich 3 durch eine Trennscheibe 4 getrennt. Die Trennscheibe 4 verhindert den Zugang zur Vorrichtung 1 von außen. Die Vorrichtung 1 umfasst eine Anzeigeeinrichtung 5, eine Kamera 6, einen Projektor 7 sowie eine elektronische Einrichtung 10.

Der Projektor 7 projiziert Markierungen auf die Innenseite 8 der Trennscheibe 4, die aufgrund der Durchsichtigkeit der Trennscheibe 4 auch vom Außenbereich 3 aus sichtbar sind. Die Projektionsfläche 9 des Projektors 7 auf der Innenseite der Trennscheibe 4 definiert einen Eingabebereich, in dem wenigstens zwei Eingabefelder dargestellt sind. Zusammen mit der zur Projektionsfläche 9 korrespondierenden Außenfläche auf der Außenseite 11 der Trennscheibe 4 wird eine Eingabevorrichtung 12 gebildet. Die Eingabevorrichtung 12 besteht also aus dem Teil der Trennscheibe 4, auf den Markierungen bzw. Eingabefelder projiziert werden.

Weiterhin befindet sich im Außenbereich 3 oder im Innenraum 2 ein Bewegungssensor 13, mit dem die Anwesenheit einer Bedienungsperson 14 detektierbar ist. Dabei kann in einer Ausgestaltung auch die Kamera 6 als Bewegungssensor fungieren.

Die Vorrichtung 1 kann z.B. in den Schaufensterflächen eines Immobilienbüros aufgestellt werden. Beim Nähern einer Bedienungsperson 14 wird die Anzeigeeinrichtung 5 von einem Ruhezustand in einen aktivem Modus versetzt, weiterhin wird der Projektor 7 aktiviert. Sobald die Bedienungsperson 14 durch die Trennscheibe 4 blicken kann, sieht sie damit in der Anzeigevorrichtung 5 eine Begrüßungsseite des Immobilienbüros vor sich, weiterhin werden an der Trennscheibe 4 in der Eingabevorrichtung 12 mehrere Auswahlmenüs dargestellt.

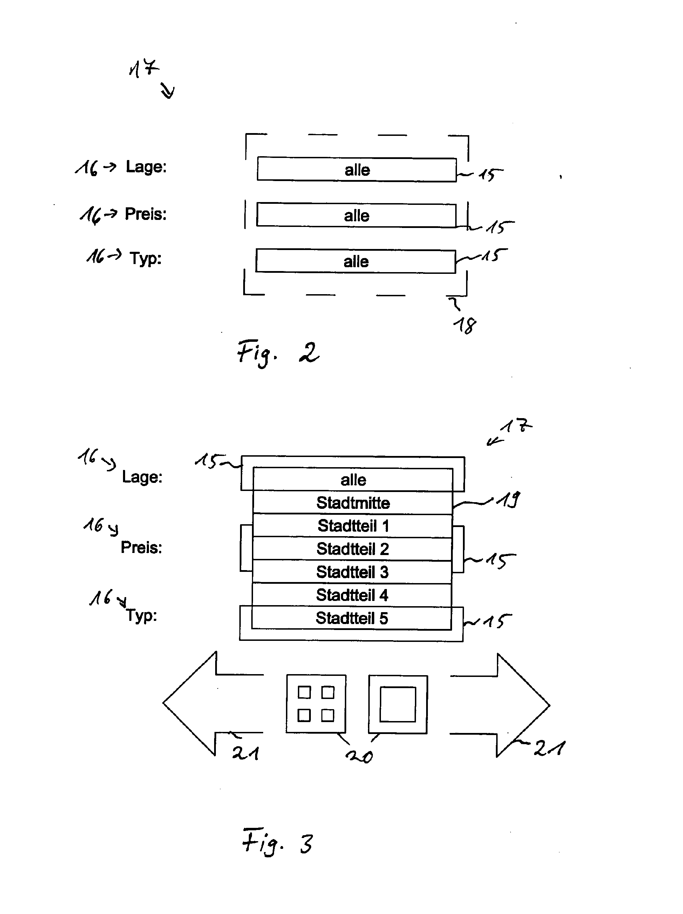

Figur 2 zeigt eine erste Ausgestaltung der Eingabevorrichtung 12 mit mehreren Markierungen 15. Der Projektor projiziert mehrere Informationsfelder 16 und Markierungen 15 auf die Projektionsfläche 9. Die Informationsfelder 16 und die Markierungen 15 bilden zusammen einen Auswahlbereich 17. Der Auswahlbereich 17 entspricht dabei von der Fläche her dem der Projektionsfläche 9, die Markierungen 15 befinden sich dabei im Eingabebereich 18. Der Eingabebereich 18 umfasst alle Markierungen 15 bzw. sonstige Flächen, in denen Eingaben durch eine Bedienungsperson 14 erwartet werden. Selbstverständlich kann eine Bedienungsperson 14 die Trennscheibe 4 auch außerhalb des Eingabebereichs 18 beispielsweise im Bereich der Informationsfelder 16 berühren, diese Berührung der Trennscheibe 4 kann aber nicht als Steuerbefehl interpretiert werden. Die Markierungen 15 sind als sogenannten Drop-Down-Menüs ausgestaltet, d. h. dass bei Ihrer Berührung der Eingabebereich 18 geändert wird.

Figur 3 zeigt einen modifizierten Auswahlbereich 17, bei dem der Eingabebereich 18 durch Berührung der Markierung 15 neben dem Informationsfeld 16 mit der Beschriftung Lage" berührt wurde.

Aufgrund dieser Berührung wird das Auswahlfeld 19 dargestellt, das die unteren Markierungen 15 zum größten Teil oder auch ganz überdeckt. Die Berührung der entsprechenden Markierung 15 wird dabei über die Kamera 6 registriert, woraufhin die Vorrichtung 1 eine Änderung des auf die Trennscheibe 4 projizierten Inhalts durch den Projektor 7 veranlasst. Das Auswahlfeld 19 enthält eine Vielzahl an Einzelfeldern, die als Einschränkungskriterium dienen können. Durch Anwahl eines Einzelfeldes auf oder an der Scheibe wird die entsprechende Einschränkung übernommen und in der entsprechenden Markierung 15 angezeigt. Je nach Änderung einer der Markierungen 15 kann die Anzeige an der Anzeigeeinrichtung 5 _{"}on-the-fly" geändert werden. Alternativ kann auch eine weitere Markierung 15 vorgesehen werden, mit der die Eingabe bestätigt wird. Mit den Feldern 20 und 21 lässt sich ebenfalls die Darstellung der Anzeigeeinrichtung 5 beeinflussen. Die Felder 20 erlauben einen Wechsel der Darstellung von einer Vielzahl an Immobilien zu einzelnen Immobilien und umgekehrt, wobei das Auswahlverhalten aufgrund der bildlichen Darstellung selbsterklärend ist. Mit den Feldern 21 kann dagegen durch die angezeigten Immobilien, unabhängig davon, ob nur eine einzige oder mehrere an der Anzeigeeinrichtung 5 dargestellt werden, geblättert werden. Die Felder 21 bilden somit eine Vorwärts- und Rückwärts-Funktion ab.

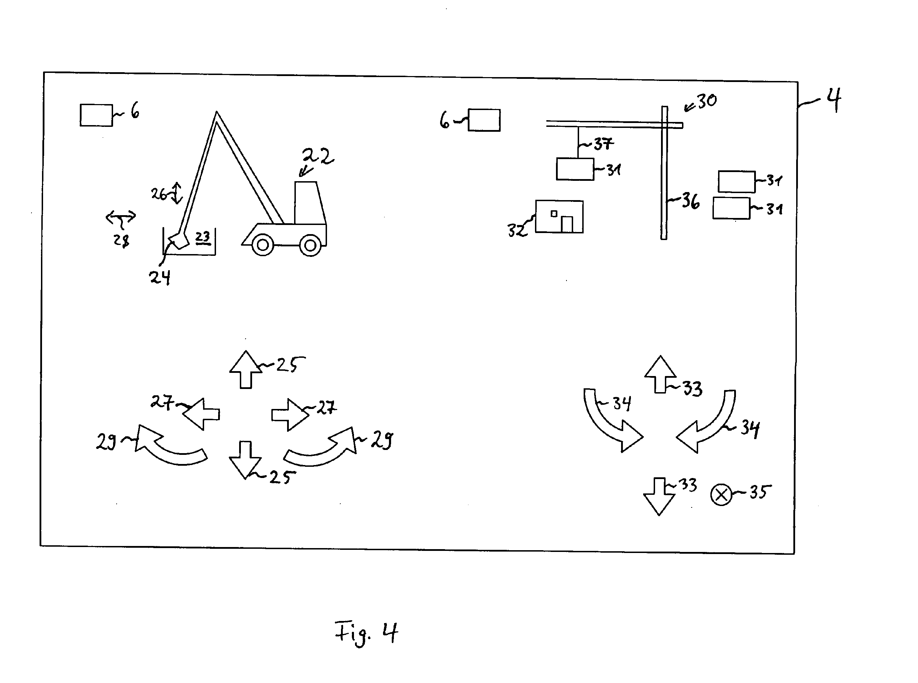

Figur 4 zeigt den Einsatz der erfindungsgemäßen Vorrichtung in einem Museum. Dort ist es wünschenswert, insbesondere Kindern beispielsweise technische Vorgänge plastisch zu illustrieren, andererseits sollen die Exponate geschützt werden. Durch Verwendung der erfindungsgemäßen Vorrichtung lässt sich die Ansteuerung der Exponate vereihfachen, insbesondere werden auch die Eingabevorrichtungen vor Vandalismus geschützt.

Figur 4 zeigt eine Szenerie mehrere nebeneinander aufgestellter Exponate, die einen Hausbau veranschaulichen sollen. In einem ersten Bereich ist ein Bagger 22 zum Ausheben der Baugrube 23 steuerbar. Die Arme des Auslegers sowie des Löffels 24 können mittels mehrerer Markierungen bewegt werden. Mit den Markierungen 25 kann eine Auf- und Abbewegung des Auslegers in Richtung des Pfeils 26 kontrolliert werden. Die Markierungen 27 erlauben dagegen eine von der Bedienungsperson aus gesehene Seitwärtsbewegung in Richtung des Pfeils 28. Mit den Markierungen 29 lässt sich dagegen der Löffel 24 auf und nieder bewegen. Die Räder des Baggers 22 sind dagegen nicht verfahrbar ausgebildet, da lediglich die Funktionalität des Auslegers dargestellt werden soll. Die Markierungen 25, 27 und 29 können von einer am Boden des Exponatraumes angeordneten Projektionseinrichtung an die Trennscheibe 4 projiziert werden, die Trennscheibe 4 muss dabei auch nicht bis zur Decke des Museumsraumes reichen. Bevorzugt schließt die Trennscheibe 4 den Exponatraum aber vollständig ab.

Angrenzend zum Bagger 22 ist ein Turmkran 30 angesiedelt, mit dem die Wände eines Fertighauses anbringbar sind. Einzelne Wände 31 können auf das Erdgeschoss 32 mit dem Turmkran 30 aufgesetzt werden, indem die Wände 31 aus einem Wartebereich abgeholt und auf das Erdgeschoss 32 aufgesetzt werden können. Zur Steuerung des Turmkrans 30 sind die Markierungen 33, 34 und 35 vorgesehen. Mit den Markierungen 34 kann der Turmkran um den Turmmast 36 geschwenkt werden, die Markierungen 33 ermöglichen ein Auf- und Ablassen des Aufzugseils. Am unteren Ende des Aufzugseils 37 befindet sich ein Magnet, der mit in den Wänden 31 befindlichen Magneten koppelt. Um die Wände 31 vom Magneten am Aufzugseil 37 wieder entfernen zu können, ist die Markierung 35 vorgesehen. Bei Betätigung der Markierung 35 wird die Wirkung des Magneten am Aufzugseil 37 unterbrochen, sodass die magnetische Verbindung aufgehoben ist. Technisch realisiert wird dies dadurch, dass der Magnet am Ende des Aufzugseils 37 als Elektromagnet ausgebildet ist und die Stromzufuhr zu den Wicklungen um den Eisenkern unterbrochen wird. Die Markierungen 33, 34 und 35 sind auf die Innenseite 8 der Trennscheibe 4 aufgeklebt, da die Bedienungsfunktionen des Turmkrans 30 gleichbleibend sind. Dadurch kann eine Projektionseinrichtung 7 eingespart werden.

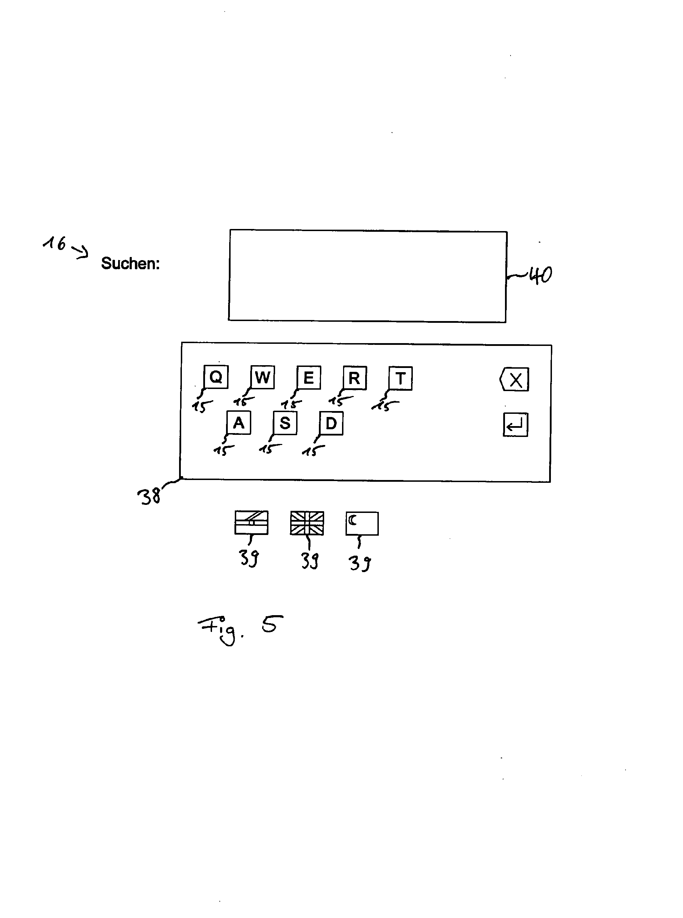

Figur 5 zeigt eine weitere Ausgestaltung eines Eingabebereichs 12, der ein Eingabefeld 40 und ein Tastenfeld 38 enthält. Dabei ist lediglich ein Teil des Tastenfeldes 38 angedeutet. Das Tastenfeld 38 wird über eine Vielzahl an Markierungen 15 realisiert, die durch Berührung mit einem Finger eine entsprechende Eingabe im Eingabefeld 37 veranlassert. Unterhalb des Tastenfeldes 38 befinden sich weitere Markierungen 39, die Landesflaggen repräsentieren. Dadurch wird es möglich, den Eingabemodus des Tastenfeldes 38 zu ändern, insbesondere dadurch, dass unterschiedliche Sätze an Markierungen 15 respektive Buchstaben dargestellt werden. Dadurch wird die Eingabe von nur in bestimmten Sprachen vorhandenen Sonderzeichen ermöglicht.

### BEZUGSZEICHENLISTE

- 1: Vorrichtung
- 2: Innenraum
- 3: Außenbereich
- 4: Trennscheibe
- 5: Anzeigeeinrichtung
- 6: Kamera
- 7: Projektor
- 8: Innenseite
- 9: Projektionsfläche
- 10:
- 11: Außenseite
- 12: Eingabevorrichtung
- 13: Bewegungssensor
- 14: Bedienungsperson
- 15: Markierung
- 16: Informationsfeld
- 17: Auswahlbereich
- 18: Eingabebereich
- 19: Auswahlfeld
- 20: Feld
- 21: Feld
- 22: Bagger
- 23:
- 24: Löffel
- 25: Markierung
- 26: Pfeil
- 27: Markierung
- 28: Pfeil
- 29: Markierung
- 30: Turmkran
- 31: Wand
- 32: Erdgeschoss
- 33: Markierung
- 34: Markierung
- 35: Markierung
- 36: Turmmast /
- 37: Aufzugseil
- 38: Tastatur
- 39: Markierung
- 40: Eingabefeld

## Patentansprüche

1. Vorrichtung (1) zur Eingabe von Daten und/oder Steuerbefehlen in eine elektronische Einrichtung (10), die mit einer Anzeigeeinrichtung (5) und/oder einer elektrischen Handlingseinrichtung (22, 30), Sicherheitseinrichtung, Verkaufsautomat oder dergleichen in Verbindung steht, wobei
- die Vorrichtung (1) die Eingabe von Daten oder Steuerbefehlen von einem Außenbereich (3) ermöglicht und
- die elektronische Einrichtung (10) in einem begehbaren Innenraum (2) angeordnet ist, der vom Außenbereich (3) durch eine Trennscheibe (4) getrennt ist, wobei die Trennscheibe (4) einen Zugang nicht autorisierter Personen in den Innenraum verhindert,
**dadurch gekennzeichnet, dass**
die Vorrichtung (1) folgendes umfasst:
- Markierungen (15) auf der Trennscheibe (4), die von der Außenseite (3) der Trennscheibe (4) sichtbar sind und wenigstens ein von einer Bedienungsperson (14) wahrnehmbares Eingabefeld auf der Außenseite (11) der Trennscheibe (4) definieren,
- wenigstens einen Sensor (6), der die Trennscheibe (4) vom Innenraum (2) her abtastet derart, dass eine manuelle Berührung der Außenseite (11) der Trennscheibe (4) vom Außenbereich (3) her im Bereich wenigstens einer Markierung (15) durch den Sensor (6) erfassbar, lokalisierbar und als Eingabe- oder Steuerbefehl verwertbar ist,
- eine Kommunikationseinrichtung (5, 22, 30) im Innenraum (2), die an die Bedienungsperson (14) optische und/oder akustische Eingabebedienungshinweise und/oder Eingabeergebnisse übermittelt, die auf einer Bedienung der Eingabevorrichtung (12) durch Berühren der Trennscheibe (4) von außen resultieren.

2. Vorrichtung nach Anspruch 1,
**dadurch gekennzeichnet, dass**
die Markierungen (15) auf der Innenseite der Trennscheibe (4) angeordnet sind.

3. Vorrichtung nach Anspruch 1 oder 2,
**dadurch gekennzeichnet, dass**
die Markierungen (15) als frei definierbares Tastenfeld (38) ausgebildet sind.

4. Vorrichtung nach einem der Ansprüche 1-3,
**dadurch gekennzeichnet, dass**
die Markierungen (15) auf die Innenseite der Trennscheibe (4) projiziert sind.

5. Vorrichtung nach einem der vorhergehenden Ansprüche,
**dadurch gekennzeichnet, dass**
die Markierungen (15) variabel und an eine Aufgabenstellung anpassbar sind, die dem Benutzer der Vorrichtung durch die Kommunikationseinrichtung (5, 22, 30) übermittelt wird.

6. Vorrichtung nach einem der vorhergehenden Ansprüche 1-3,
**dadurch gekennzeichnet, dass**
die Markierungen (15) aufgeklebt, aufgedruckt oder aufgemalt sind.

7. Vorrichtung nach einem der vorhergehenden Ansprüche,
**dadurch gekennzeichnet, dass**
der Sensor als Kamera (6) ausgebildet ist, durch welche Änderungen im Bereich der Markierungen (15) erfassbar sind.

8. Vorrichtung nach einem der vorhergehenden Ansprüche,
**dadurch gekennzeichnet, dass**
der Sensor als Bewegungssensor (13) ausgebildet ist.

9. Vorrichtung nach einem der vorhergehenden Ansprüche,
**dadurch gekennzeichnet, dass**
der Sensor als auf der Innenseite der Trennscheibe (4) angeordneter Kapazitätssensor ausgebildet ist.

10. Vorrichtung nach einem der vorhergehenden Ansprüche,
**dadurch gekennzeichnet, dass**
der Sensor drahtlos mit der elektronischen Einrichtung (10) verbunden ist.

11. Vorrichtung nach einem der vorhergehenden Ansprüche,
**dadurch gekennzeichnet, dass**
die Kommunikationseinrichtung (5) als Bildschirm ausgebildet ist, über welchen abfragbare Informationen und/oder Bedienungshinweise an die außerhalb der Trennscheibe (4) befindliche Bedienungsperson (14) ausgebbar sind.

12. Vorrichtung nach einem der vorhergehenden Ansprüche,
**dadurch gekennzeichnet, dass**
die Kommunikationseinrichtung (5, 22, 30) einen Lautsprecher umfasst, dessen akustische Signale von einer außerhalb der Trennscheibe (4) befindlichen Bedienungsperson (14) wahrnehmbar sind und/oder eine Spracheingabevorrichturlg umfasst, die akustische Signale von einer außerhalb der Trennscheibe (4) befindlichen Bedienungsperson (14) wahrnimmt und verarbeitet.

13. Vorrichtung nach einem der vorhergehenden Ansprüche,
**dadurch gekennzeichnet, dass**
die Kommunikationseinrichtung (5), der Sensor (6) und ggf. eine Einrichtung zur Projektion (7) der Markierungen (15) auf die Innenseite (8) der Trennscheibe (4) innerhalb eines gemeinsamen Gehäuses angeordnet sind.

14. Vorrichtung nach einem der vorhergehenden Ansprüche,
**dadurch gekennzeichnet, dass**
die Trennscheibe (4) eine Schaufensterscheibe eines Ladengeschäftes ist.

15. Vorrichtung nach einem der vorhergehenden Ansprüche,
**dadurch gekennzeichnet, dass**
sie einen Bewegungsmelder (13) umfasst, durch welchen die Vorrichtung (1) bei Annäherung einer Person an die Außenseite (11) der Trennscheibe (4) einschaltbar ist.

16. Verfahren zur Ansteuerung einer elektronischen Einrichtung (10), die mit einer Anzeigeeinrichtung (5) und/oder einer Handlingseinrichtung (22, 30) in Verbindung steht, mit folgenden Verfahrensschritten:
- Anordnen der elektronischen Einrichtung (10) zusammen mit der Anzeige- oder Handlingseinrichtung (5, 22, 30) hinter einer Trennscheibe (4), die einen Zugriff auf die elektronische Einrichtung (10) oder die Handlingseinrichtung (22, 30) durch nicht autorisierte Personen verhindert;
- Vorsehen eines Eingabeelementes auf der Trennscheibe (4) durch Markierungen (15) auf der Trennscheibe (4), die von der Außenseite (11) der Trennscheibe (4) her sichtbar sind und von einer Bedienungsperson (14) wahrnehmbare Eingabefelder auf der Außenseite (11) der Trennscheibe (4) definieren;
- Vorsehen wenigstens eines Sensors (6), der die Trennscheibe (4) vom Innenbereich (2) her abtastet derart, dass eine manuelle Beaufschlagung der Außenseite (11) der Trennscheibe (4) vom Außenbereich (3) her im Bereich wenigstens einer der sichtbaren Markierungen (15) durch den Sensor (6) erfasst und lokalisiert wird und als Eingabe- oder Steuerbefehl weitergeleitet wird;
- Übermittlung von Eingabe-Bedienungshinweisen oder Eingabe-Steuerbefehlen und/oder abfragbare Informationen durch eine Kommunikationseinrichtung (5, 22, 30) an die Bedienungsperson (14), wobei die Kommunikationseinrichtung (5, 22, 30) optische und/oder akustische Hinweise an die Bedienungsperson (14) übermittelt sowie
- Berühren der Trennscheibe (4) im Bereich der auf der Trennscheibe (4) sichtbaren Tastenfelder zur Auslösung eines Eingabe- und/oder Steuerbefehls.
